# EUROPEAN PATENT APPLICATION

(11) **EP 0 992 831 A1**
(43) Date of publication of application: **12.04.2000**
(21) Application number: 99119679.1
(22) Date of filing: 05.10.1999
(51) Int. Cl.: G02C 5/22

(54) **Flexible ear-piece for eyeglasses, of the type with ball elastic yielding mechanism**

(30) Priority: 09.10.1998 IT TV980040 U
(71) Applicant: Ideal S.R.L., 32030 Quero (IT)
(72) Inventor: Montagner, Luciano, 31040 Segusino (TV) (IT)
(74) Representative: D'Agostini, Giovanni, Dr.

(57) **Abstract**

A flexible ear-piece for eyeglasses, of the type with a ball elastic yielding mechanism, comprising an ear-piece (1), one of whose ends makes up the supporting end on the auricle of the ear, and the other one associates a small case (2), axially drilled to form a cavity (221), inside of which a compression spring (3) having one end resting on the bottom of said bole (223) is placed and the other end pushing a ball (4), said small case (2) offering a couple of hinging protrusions (23) among which, being hinged to them, a cam (5) as a part of an articulation for hinging to the eyeglasses front, said cam (5) retaining and pushing said ball (4).

## Description

### Technical Field

The present invention has for object a flexible ear-piece for eyeglasses, of the type with ball elastic yielding mechanism.

The invention, finds particular even if not exclusive application in the field of the eyeglasses frames production and in their metal findings.

### State of the art

The eyeglasses frames are certainly known.

Some of these, provide the use of the so called "flexible ear-piece" or more simply "flex" devices, made nearby the hinging, for allowing the elastic engagement to that eyeglasses part commonly known as nose. Such function, mainly for the ear-piece extroversion or extra-opening, obtained on both sides of the eyeglasses, has the advantage of ensuring a better wearing, because the less id the pressure exerted by the ear-pieces or side-pieces on the temples, the more they can be easily worn by most people, consequently resulting mainly suitable to the different anatomical shapes of each individual. The sector companies, thus, have been working since a long time for researching innovative and improving solutions, both concerning functioning and mainly dimensions.

For instance, a traditional elastic ear-piece or side-piece, which found wide success among the consumers, consists of the European patent n. 79400087.7. In this same, an elastic hinge for eyeglasses frame, essentially made up of a case, laterally associated to the ear-piece, for retaining a tie-rod means coaxial to said case, and in which the end part of the tie-rod is threaded, on which a bushing which ensures a spring positioning is screwed, while on the other side it rests inside of a seat obtained into said case, was described.

Of course, many inventions followed this first proposal, with the purpose of better improving and perfecting the ear-piece flex function, and, among these, we mention only some as references for the state of the art. It is the case of the utility model n. 181221, having for object an improved hinge for the articulation to an eyeglasses frame of an elastically wide openable ear-piece, in which a square support buried in the frame is provided, on which an also square support making up a shoulder for a spring compression is engaged. Or also of the Italian patent n. 1 147 198, which has for object an ear-piece for eyeglasses with elastic hinging, in which the ear-piece end involves a drilled block within which a hinge connection end is axially inserted. Continuing with a reduced diameter, it supports a sharp plate inserted which joints within the drilling while on its back a stretching helical spring locked at the element's end by a threaded ring nut is provided. In such a case the ear-piece elastic opening according to a determinate angle by elastic yielding of the hinge joint is allowed.

The drawbacks found, and common to the mentioned solutions, may be referred exclusively to the complexity of the devices used, which involved, furthermore, a total oversizing of the flex device. Furthermore, in spite their performances are fair, they cause enough problems during the manufacturing step, on one hand due to the manufacturing of the many precision components, on the other, for their assembling, definitely having considerable effects on the device production times and costs. The main purpose of the sector companies, thus, was that of obtaining the execution of the ear-piece elastic devices which, even being mainly reduced in their dimensions, may offer a fine functionality at the same time aiming at reducing the components, easing their assembling and reducing the costs.

In the sector, rather full of flex devices, also other mechanisms, which substantially differ from the previous ones, even obtaining the same function, find a place. More in particular, we are referring to the so-called ball-ones, which, substantially derive from two national patents (Luxottica), respectively n. 1137027, and 1153126. Substantially, in the first one, n. 1137027, the applicant describes a "connecting element, particularly for elastic hinges applicable to eyeglasses frames in plastic material, which includes a fork-like body, which may be housed visibly, for all its length, into a sagging, defined at the end of an ear-piece, and able to become a housing seat for some elastic contrast means, acting on a cam element, integrally provided on the front part of a frame. The fork-like body defines, at one of its ends, a fork-like element, jointable by hinging to said cam element and, at the other end, a fixed seat, jointable astride of the metal core, inserted into the ear-piece". Finally, in the patent n. 1153126, the same applicant, describes a process for making ear-pieces, which consists in cutting a metal section bar of the length of an ear-piece, in making in correspondence of an end of such a bar, an axial hole, concerning a first portion of said bar, where the spring and the small ball which make up the elastic articulation are housed, in thinning said bar in its middle portion and in making the final end of this latter substantially filiform.

Of course, this ball-flex mechanism, was subjected to many shape and functional changes during the years, up to reach a presently improved feature. In order to allow a better understanding of the state of the art, an explanatory Table of the known devices indicated with n. I. is here enclosed, and in detail:

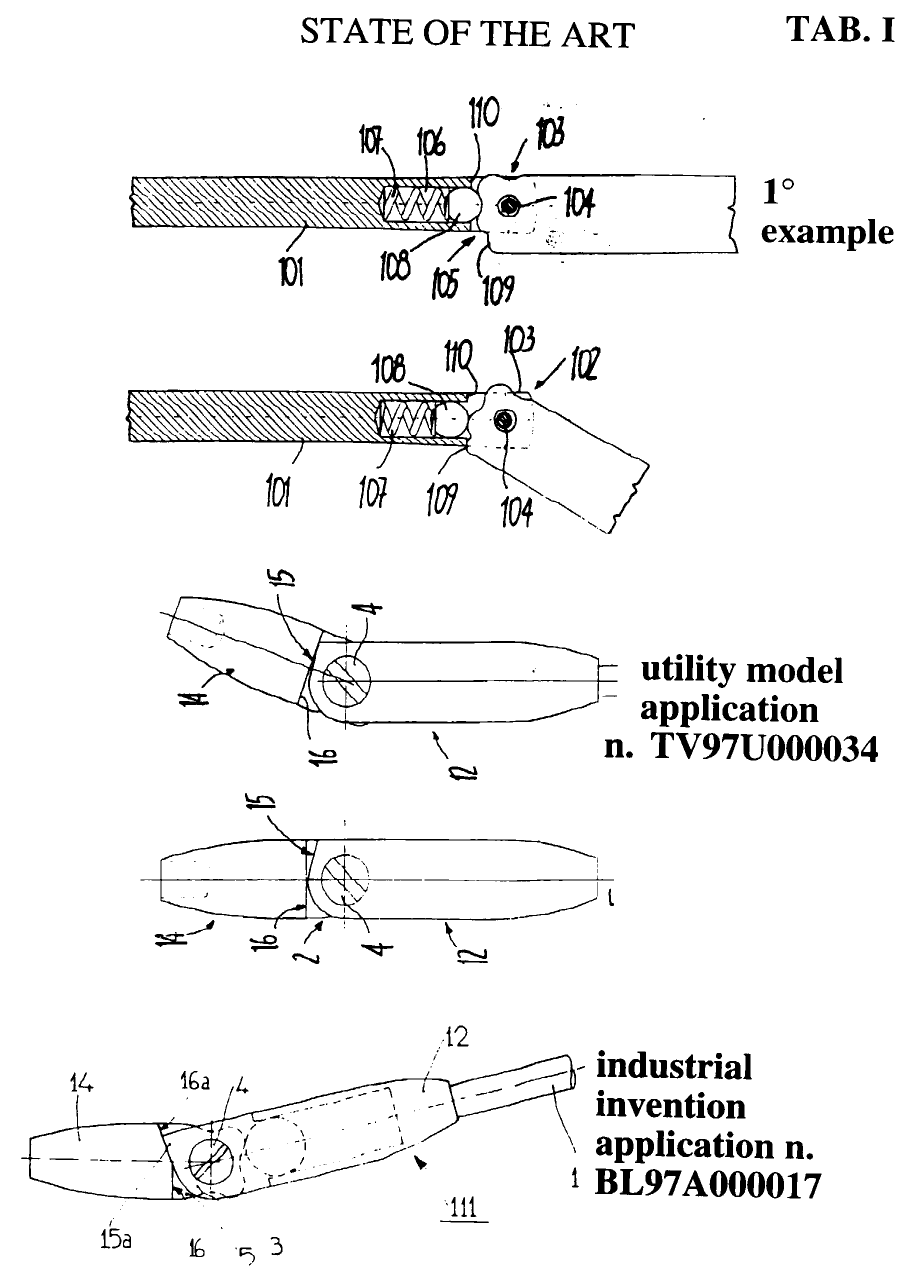

- the first drawing, shows a whole and in longitudinal section view, of a known flex device, shown in a static condition, corresponding to an ear-piece perpendicular to the eyeglasses front;
- the second drawing, shows a view of the same known flex device as in previous Figure, but in a dynamic condition of the ear-piece extroversion, in which the cam shoulder rests along the small case mouthing;
- the third drawing, shows a top view of a known flex device n, TV97U000034 (Italiana Aste) in a static condition, corresponding to an ear-piece perpendicular to the eyeglasses front;
- the fourth one, shows always a top view of the known flex device, as in the previous drawing, n. TV97U000034 (Italiana Aste) but in a dynamic condition of the ear-piece extroversion, in which the tilted shoulder 15 of the first body 12 rests on the plane surface 16 of the second body 14;
- the fifth drawing, shows a top view of the device as in the industrial invention n. BL97A000017 (Italiana Aste), in a condition of ear-piece extroversion with the tilted surface 15a in contact with the opposite shoulder 16a of the second body.

Among these improvements, we may point out the utility model public application n. TV97U000034 dated 04.07.1997, in the name of the company Italiana Aste srl. It has for object an IMPROVED HINGE STRUCTURE, PARTICULARLY FOR EYEGLASSES, which aims at providing an ear-piece (see TAB. I) associated to a first body 12 having an axial seat for a spring and a ball and on one of whose ends a cam protruding from a second body 14 is fulcrumed associable to a front piece, characterised in that said first body 12, has in said end, a tilted perimetrical surface 15 which interacts in contact, in the extra-opening step, with said second body 14.

The applicant, in said patent application confirms the existence of ball flex mechanisms, and thus, as it is also reported in TAB. I, made up of an ear-piece 101, having a cylindrical shape, whose final end 102 is diametrically grooved for defining a pair of fins 103, transversally to which, along the same axis, some holes are obtained as seats for a screw 104 for the fulcruming of a cam 105 obtained at one end of an element for hinging, to the eyeglasses front.

But there is, as already mentioned, the following patent application, also a public one, for industrial invention n. BL97A000017, (see again TAB. I) also in the name of the company Italiana Aste srl, and against whose possibility of being patented a negative opinion was expressed because, due to the pre-existing application TV97U000034, it seemed deprived of the validity requirements ex artt. 14 and 16 I.i. In it, the applicant states that: "the main characteristic of this invention is that of providing an association of the elastic hinging element 12 to the front end element 14, so that their interaction, during the ear-piece 1 maximum widening step, is ensured in time by a suitable contact surface which is obtained with shoulders and tilted surfaces 15a and 16a to be realised at the head of the same elements to be hinged 12 and 14, on the edge 3 and on the shoulder base 16 of the cam 5, close to the hinging pin 4".

However, the previously described solutions, does not seem presently optimised, because they still have some drawbacks mainly of functional type. Among these, we can consider that the problem of the deformation perimetrically to the small case mouthing, which some solutions proposed to solve, still remains even if reduced. This is mainly due to the fact that the known solutions intervene exclusively on a different shape of the concerned shoulders, during the ear-piece extroversion step, and in particular, working on the inclination of the two protrusions heads obtained by the small case manufacturing. It follows that, also the limit set to the extroversion derives from the interaction of: particularly shaped protrusions of the small case-cam perimetral shape. Definitely, it may be concluded that there is anyway a deformation of the concerned metal parts in contact, because they are substantially plane surfaces with large contact points between the different parts involved in the action. It may also be understood that the more are the contact points the larger is the friction area, which in time means a wearing, up to causing the loss of the elastic function in the device.

For better explaining the state of the art, it may be said that in these solutions, as in others, the ball, when stressed by the cam, is completely free to slide along the small case axial hole, being almost deprived of any limit switch. Analysing the text but also the Figures enclosed with the patents for instance of the company Italiana Aste, and marked from number 1 to number 4, it may be confirmed that the axial hole obtained in the small case associated to the ear-piece end, has a constant diameter, which extends from the hole bottom up to the mouthing. It follows that, eventually, the only stop to the ball stroke is defined by the spring maximum compression. This condition though, never occurs, because we saw that the limits, for instance in case of the ear-piece extroversion, are not defined by the ball stroke, but by the interaction: small case protrusions-cam perimetral shape. Thus the consequence is that on a step of the ear-piece maximum extroversion, hindered by the shoulders further extroversion, the ball is still movable, if stressed by the cam, along the retaining axial hole in the small case, allowing a certain slack up to the maximum compressibility of the contrast spring.

A second aspect to be considered, concerns the fact that the ear-pieces are not allowed to maintain, particularly in the extra-opening step, a sufficient elastic compression, or vice-versa, it may happen that sometimes, they exert an excessive force, which in one case may give the user a feeling of the eyeglasses instability, while in the other case it may involve some problems at the temples height. These drawbacks derive from a modification of the shoulders which, as we saw, characterise the previous solutions, forcing the ear-pieces manufacturer to use different components according to the type of shape required by the hinge in an ear-piece, and this only in order to find those which better fit for obtaining a good result for what concerns the elastic yielding lightness.

These and other purposes, are reached by the present invention according to the characteristics as in the enclosed claims, solving the mentioned problems by means of an flexible ear-piece for eyeglasses, of the type with a ball elastic yielding mechanism, comprising an ear-piece, one of whose ends makes up the supporting end on the auricle of the ear, and the other one associates a small case, axially drilled, inside of which a compression spring having one end resting on the bottom of the hole obtained axially to the small case is placed, and one end contacts a ball, said small case offering some protrusions among which is interplaced, being hinged to them, a cam as a part of an articulation for hinging to the eyeglasses front, and in which:
- - in a small case, the heads of the fins which protrude to hinge a cam as a part of an articulation for being hinged to the eyeglasses front, are round-shaped;
- - the cavity, obtained axially to the small case, comprises a seat nearby the mouthing aimed at partially housing the ball, stressed on one side by a compression spring and retained in seat on the other, by a cam with which it interacts;
- - the cam has, on the side corresponding to the articulation extrados, an extending body, which in condition of a progressive extroversion of the ear-piece, is aimed at resting on the ball up to when this latter, because of the contact on the bottom of said seat, stops, thus avoiding the ear-piece further widening.

### Advantages.

In such a way, through the considerable creative contribution whose effect represents an immediate technical progress, many improvements are obtained. First, a substantial reduction of the small case dimensions, mainly of its length and also of its width, is obtained. This condition brings some evident functional and aesthetic qualities to the flexible ear-piece, allowing the widening of the range of era-pieces on which said device may be assembled.

Another quality, consist of the movement optimisation, with the elimination of slacks, not only in the ear-piece extroversion dynamical condition, but mainly in its static condition, for the period of longer use and which corresponds to the ear-piece in a normally open position.

An extremely important advantage though, consist of that the problem of the deformation of surfaces which are concerned by a striking contact in the ear-piece extroversion step, in this case is completely solved, because, in this condition, there is no contact of extended surfaces, and in particular of the hinge nose associated with the eyeglasses front with the small case shoulder. In any case, even if the contact should occur, it would be slight and non-functional, because the ear-piece stroke limit is no more due, as it occurred for the previous solutions, to the interaction hinge nose - small case shoulder, but to the cam shape-with the ball limit stroke. From this it may be understood that the system particularly aims at preserving, for these ball devices, the elastic function, reducing the wear at the minimum seen that the only stressed part is the cam extending body, corresponding to the top of the same, which resting only on the ball, reduces the friction phenomena, at the same time giving an unusual softness, particularly pleasant for the user, in yielding at the time of the eyeglasses wearing.

These and other advantages will appear from the following detailed description of an embodiment preferred solution with the aid of the enclosed drawings, and in particular:

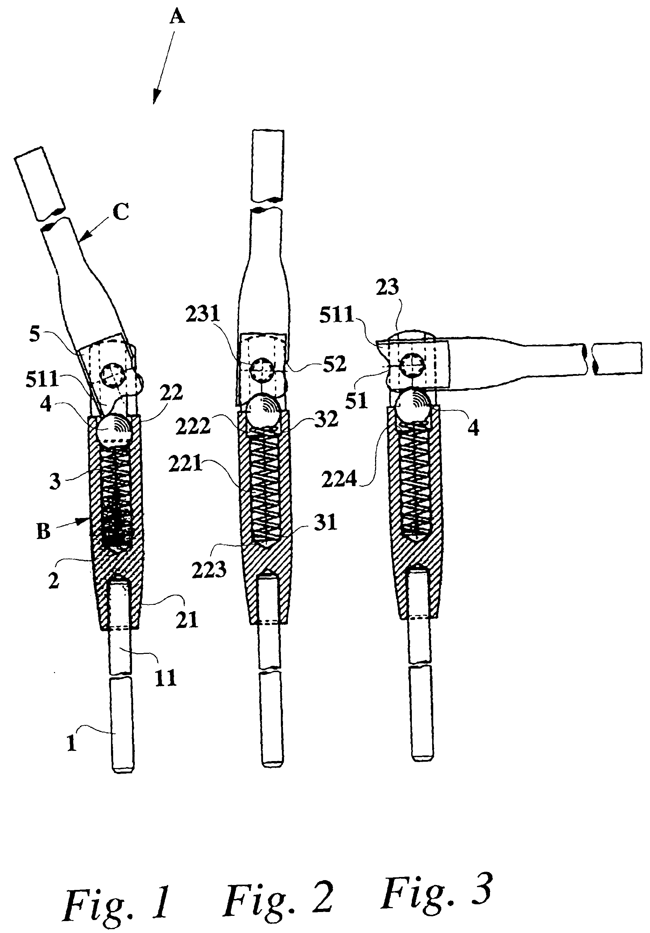

- Figure 1., shows a view of the flex device as in the present invention, with the small case shown in longitudinal section, in which the ear-piece is in a condition of maximum extroversion;
- Figure 2., shows a view of the same flex device as in the present invention, with the small case shown in longitudinal section, in which the ear-piece is in a static condition, corresponding to a commonly used ear-piece and perpendicular to the eyeglasses front;
- finally, Figure 3., still shows a view of the flex device as in the present invention, with the small case shown always in longitudinal section, in which the ear-piece is in a further static condition, corresponding to an ear-piece parallel to the eyeglasses front, that is folded on them.

### Description of a possible execution.

Also referring to the figures, it may be noticed that at least an flexible ear-piece (A), particularly for eyeglasses, is elastically yielding for allowing, once they are worn, the widening, that is the extroversion of the same beyond the usual opening axis, generally perpendicular, with respect to the frame front or face. More in detail, each ear-piece (1) of the eyeglasses, provides as associated in correspondence of an end, a flex or elastic yielding device (B), which interacts with a part of device (C), as component of the articulation or "nose" of the hinge, in its turn engaged on the eyeglasses frame front.

In the case in point, the flex or elastic yielding device (B), is made up of a small case (2), axially hollow (221), having rather limited dimensions, on one side (21) butted on the end (11) of an ear-piece (1), on the other side, having a mouthing (22) for the access inside of the same. In the cavity (221) of the small case (2), a spring (3) is housed, one of whose first ends (31), rests on the bottom (223) of the cavity (221) of the small case (2), while a second end (32), pushes a ball (4) partially housed within the small case (2). Even more in detail, nearby the mouthing (22), resulting the cavity diameter (221) locally increased, a seat (222) is obtained aimed at containing said ball (4) and at limiting its stroke. This because, on said seat bottom (222), an annular tooth is obtained (224), which makes up the natural obstacle beyond which the ball (4), when stressed, cannot proceed, limiting as a consequence, indirectly, the action of the means (C) which stresses said ball (4).

From said small case (2), two parallel fins (23), symmetrical, transversally drilled (231) protrude forwards for fulcruming by means of a screw or other similarly passing means that articulation part (C), known as cam (5). This latter, along two adjacent sides, respectively on the intrados (52) of the cam (5) and on the head side (51), is supplied with two slightly protruding concave seats (51-52), which, partially continue, in negative, the ball spherical profile (4). In this hypothesis, thus, the cam profile, and in particular the surfaces (51) and (52) stress the ball (4), making the same, during the passage from one seat to the other, move axially with respect to the small case (2), opposed only by compression spring force (3). It may also be understood that the limit of the stroke run by the ball (4), is defined, on a side by the contact of the same on the cam perimetrical surface (5), on the other by the contact on the tooth (224) inside of the cavity (221).

Always for what concerns the cam (5), nearby the articulation extrados, the seat (51) terminates with one rather protruding end or asymmetric extending body (511). The function of said extending body (511), together with the ball (4), is then that of defining a limit to the flexible ear-piece extra opening (A), this because by widening the ear-piece (1) opening axis beyond its limit, the extending body top (511) will rest on the ball (4), until this continues to yield. At the time said ball (4) contacts the tooth (224), because of the ear-piece (1) progressive widening, the extending body top (511), will not be able to pass over the ball (4) determining the elastic function stop. Once the flexible ear-piece (A) extroversion function is over, in the extending body (511), the adjacent surface at the top, resulting tilted will favour the ball action (4) which pushed by the spring (3), will force the ear-piece (1) to take again a position orthogonal to the eyeglasses front.

## Claims

1. Flexible ear-piece for eyeglasses, of the type with a ball elastic yielding mechanism, comprising an ear-piece (1), one of whose ends makes up the supporting end on the auricle of the ear, and the other one associates a small case (2), axially drilled to form a cavity (221), inside of which a compression spring (3) having one end resting on the bottom of said hole (223) is placed and the other end pushing a ball (4), said small case (2) offering a couple of hinging protrusions (23) among which, being hinged to them, a cam (5) as a part of an articulation for hinging to the eyeglasses front, said cam (5) retaining and pushing said ball (4), characterised in that:
- - said cavity (221), in the seat of said ball (4) an enlarged hole seat is provided (222) in order to partially housing said ball (4), impeding its excursion inside the hole (221) by a tooth-ring (224) created by said enlarged hole seat (222);
- - said cam (5) has, on the external side of the articulation to the eye-glass, an extended protrusion (511), which in condition of a progressive external flexion of said ear-piece (1), is aimed at resting on said ball (4) up to when this latter, stops when contacting said reduction in hole (224), thus avoiding said ear-piece (1) further widening.

2. An eye-glass mount (C) with a couple of flexible ear-piece (B), according to previous claims, characterised in that said couple of hinging protrusions (23), have an external round-shape head, said cam (5) being hinged between them by a hinge means (231), said cam (5) being interchangeably locked to the said eye-glass front hinging end ©.

3. An eye-glass mount (C) with a couple of flexible ear-piece (B), according to previous claim characterised in that, along two adjacent sides of said cam (5), respectively on inner side (52) and on the head side (51), two slightly concave seats are provided (51-52).

4. An eye-glass mount (C) with a couple of flexible ear-piece (B), according to previous claim characterised in that said cam (5), has on the other side of said head concave seat (51), opposed to said protrusion (511), a rounded corner that brings to said inner adjacent concave protrusion (52).
